# EUROPEAN PATENT APPLICATION

(11) **EP 4 064 755 A1**
(43) Date of publication of application: **28.09.2022**
(21) Application number: 20889589.6
(22) Date of filing: 16.11.2020
(51) Int. Cl.: H04W 28/06, H04L 12/26

(54) **DATA PACKET SENDING METHOD AND APPARATUS, AND DATA PACKET RECEIVING METHOD AND APPARATUS**

(30) Priority: 18.11.2019 CN 201911128889
(71) Applicant: ZTE Corporation, Shenzhen, Guangdong 518057 (CN)
(72) Inventor: LIU, Xu, Shenzhen, Guangdong 518057 (CN); DAI, Bo, Shenzhen, Guangdong 518057 (CN); SHA, Xiubin, Shenzhen, Guangdong 518057 (CN)
(74) Representative: Novagraaf Technologies
(86) International application number: PCT/CN2020/129032
(87) International publication number: WO 2021/098640

(57) **Abstract**

Provided are a method and apparatus for sending a data packet, and a method and apparatus for receiving a data packet. The method for sending a data packet comprises: sending a first message to a terminal, wherein the first message at least indicates a first index of a first data packet to be sent; and sending the first data packet to the terminal, wherein the first data packet is used for instructing the terminal to abandon receiving the first data packet in cases where the first index is the same as a second index of a second data packet which has been received by the terminal, wherein the same data packets are configured with the same index.

## Description

### Technical Field

The present invention relates to the field of communications, and in particular to a method and apparatus for sending data packets, and a method and apparatus for receiving data packets.

### Background

For a Single Cell Point-To-Multipoint (SC-PTM) service, transmission objects of one data packet is multiple UE; and in order to ensure the receiving performance of the UE, a network needs to retransmit the same data packet according to a predefined number of repetitions. However, for certain individual UE, receiving of the data packet may have been completed before arrival of the maximum number of repetitions. According to the current mechanism, the UE does not know whether a next data packet to be transmitted is a newly-transmitted data packet or a retransmitted data packet, and thus for the individual UE, a situation of still continuing to receive the data packet that has been successfully received may occur, which will adversely affect the power consumption of a terminal.

Regarding the problem of high power consumption of a terminal caused by repeated reception of data packets in the related art, no solution has been proposed yet.

### Summary

Embodiments of the present invention provide a method and apparatus for sending data packets and a method and apparatus for receiving data packets, so as to at least solve the problem of high power consumption of a terminal caused by repeated reception of data packets in the related art.

According to some embodiments of the present invention, a method for sending data packets is provided, and includes:
a first message is sent to a terminal, wherein the first message at least indicates a first index of a first data packet to be sent; and the first data packet is sent to the terminal, wherein the first data packet is used for instructing the terminal to abandon receiving the first data packet in cases where the first index is the same as a second index of a second data packet which has been received by the terminal, wherein the same data packets are configured with the same index.

According to some other embodiments of the present invention, a method for receiving data packets is provided, and includes:
a first message is received, wherein the first message at least indicates a first index of a first data packet to be received; and the first data packet is abandoned from being received in cases where the first index is the same as a second index of a second data packet which has been received, wherein the same data packets are configured with the same index.

According to some other embodiments of the present invention, an apparatus for sending data packets is provided, and includes:
a first sending module, configured to send a first message to a terminal, wherein the first message at least indicates a first index of a first data packet to be sent; and
a second sending module, configured to send the first data packet to the terminal, wherein the first data packet is used for instructing the terminal to abandon receiving the first data packet in cases where the first index is the same as a second index of a second data packet which has been received by the terminal, wherein the same data packets are configured with the same index.

According to some other embodiments of the present invention, an apparatus for receiving data packets is provided, and includes:
a first receiving module, configured to receive a first message, wherein the first message at least indicates a first index of a first data packet to be received; and
an abandoning module, configured to abandon receiving the first data packet in cases where the first index is the same as a second index of a second data packet which has been received, wherein the same data packets are configured with the same index.

According to some other embodiments of the present invention, a network system is provided, and includes a base station and a terminal, wherein the base station is configured to send a first message to a terminal, wherein the first message at least indicates a first index of a first data packet to be sent; and the terminal is configured to receive the first message, and to abandon receiving the first data packet in cases where the first index is the same as a second index of a second data packet which has been received by the terminal, wherein the same data packets are configured with the same index.

According to still some other embodiments of the present invention, a computer-readable storage medium is further provided, the computer-readable storage medium stores a computer program, wherein the computer program is configured to execute, when running, the steps in any one of the described method embodiments.

According to still some other embodiments of the present invention, an electronic apparatus is further provided, and includes a memory and a processor; wherein the memory stores a computer program, and the processor is configured to run the computer program to execute the steps in any one of the described method embodiments.

### Brief Description of the Drawings

The drawings illustrated herein are used for providing further understanding of the present invention and constitute a part of some embodiments of the present invention, and the illustrative embodiments of the present invention and illustrations thereof are used for explaining the present invention, rather than constitute inappropriate limitation on the present invention. In the drawings:
Fig. 1 is a hardware structural block diagram of a base station for a method for sending data packets according to some embodiments of the present invention;
Fig. 2 is a flowchart of a method for sending data packets according to some embodiments of the present invention;
Fig. 3 is a flowchart of a method for receiving data packets according to some embodiments of the present invention;
Fig. 4 is a structural block diagram of an apparatus for sending data packets according to some embodiments of the present invention;
Fig. 5 is a structural block diagram of an apparatus for receiving data packets according to some embodiments of the present invention;
Fig. 6 is a schematic diagram of a flowchart of transmission of data packets according to one optional embodiment of the present invention; and
Fig. 7 is a schematic diagram of a flowchart of transmission of data packets according to another optional embodiment of the present invention.

### Detailed Description of the Embodiments

Hereinafter, the present invention is described in detail with reference to the accompanying drawings and in conjunction with the embodiments. It is to be noted that embodiments in the present invention and features in the embodiments may be combined with one another without conflicts.

It should be noted that the terms "first", "second" etc. in the description, claims, and accompanying drawings of the present invention are used to distinguish similar objects, and are not necessarily used to describe a specific sequence or order.

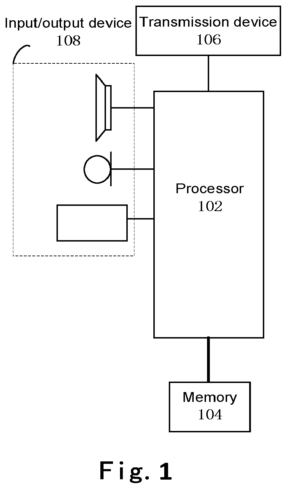

Method embodiments provided in embodiments of the present invention may be executed in a base station, a computer terminal, or similar computing apparatuses. Taking execution of method embodiments on a base station as an example, Fig. 1 is a hardware structural block diagram of a base station for a method for sending data packets according to some embodiments of the present invention. As shown in Fig. 1, a base station 10 may include one or more (Fig. 1 shows only one) processors 102 (the processors 102 may include, but are not limited to processing apparatus such as a micro control unit (MCU) or a programmable logic device, FPGA) and a memory 104 for storing data. In an embodiment, the base station can further include a transmission device 106 and an input/output device 108 for communication functions. A person of ordinary skill in the art would understand that the structure shown in Fig. 1 is merely exemplary, and does not limit the structure of the base station. For example, the base station 10 may also include more or fewer components than those shown in Fig. 1, or have different configurations from that shown in Fig. 1.

The memory 104 may be used for storing a computer program, for example, a software program and a module of application software, such as a computer program corresponding to the method for sending data packets in the embodiments of the present invention; and the processor 102 runs the computer program stored in the memory 104 to execute various functional applications and data processing, i.e. to implement the described method. The memory 104 may include a high-speed random access memory, and may also include a non-transitory memory, such as one or more magnetic storage apparatuses, flash memories, or other non-transitory solid-state memories. In some examples, the memory 104 may further include memories that are remotely located with respect to the processor 102, and these remote memories may be connected to the base station 10 over a network. Examples of the described network include, but are not limited to the Internet, an intranet, a local area network, a mobile communication network, and a combination thereof.

The transmission device 106 is configured to receive or send data via a network. Specific examples of the network may include a wireless network provided by a communication provider of the base station 10. In one example, the transmission apparatus 106 includes a Network Interface Controller (NIC for short) which may be connected to other network devices by means of a base station, thereby being able to communicate with the Internet. In one example, the transmission device 106 may be a Radio Frequency (RF for short) module which is configured to communicate with the Internet in a wireless manner.

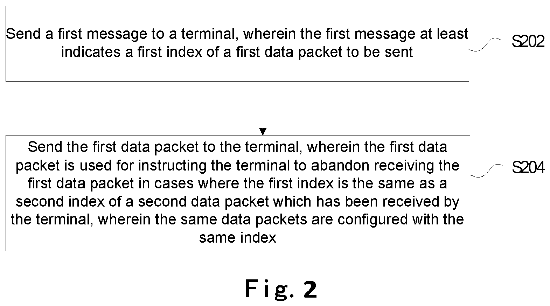

The present embodiment provides a method for sending data packets, the method is running in a base station. Fig. 2 is a flowchart of a method for sending data packets according to some embodiments of the present invention. As shown in Fig. 2, the flow includes the following steps:
step S202, a first message is sent to a terminal, wherein the first message at least indicates a first index of a first data packet to be sent; and
step S204, the first data packet is sent to the terminal, wherein the first data packet is used for instructing the terminal to abandon receiving the first data packet in cases where the first index is the same as a second index of a second data packet which has been received by the terminal, wherein the same data packets are configured with the same index.

By means of the steps, as a first message is sent to a terminal, wherein the first message at least indicates a first index of a first data packet to be sent; and the first data packet is sent to the terminal, wherein the first data packet is used for instructing the terminal to abandon receiving the first data packet in cases where the first index is the same as a second index of a second data packet which has been received by the terminal, wherein the same data packets are configured with the same index, the problem of high power consumption of a terminal caused by repeated reception of data packets in the related art is solved, thereby reducing the power consumption of the terminal.

In an embodiment, an execution subject of the described steps may be a base station, but is not limited thereto.

In an embodiment, the method further includes: the data packets are sent according to a data transmission period, wherein a designated data packet in the data packets is configured to perform one new transmission and at least one retransmission within a designated data transmission period.

In an embodiment, the first message further indicates at least one of: the total number of data packets to be transmitted, a data transmission period, the number of retransmissions of a designated data packet, a new-transmission time-domain interval of the designated data packet, and a retransmission time-domain interval of the designated data packet.

It should be noted that the terminal can receive data packets according to the data transmission period.

It should be noted that for example, four different data packets are to be transmitted, then the four different data packets can be pre-configured to be sent within a designated data transmission period, wherein each data packet is configured to be newly-transmitted once and retransmitted once. Each of the four different data packets can also be configured with a unique index, that is to say, within the designated data transmission period, the indexes can function to distinguish different data packets. It should also be noted that the four data packets can be first newly-transmitted once and then retransmitted once in sequence in a unified manner. It should also be noted that in the designated data transmission period, the index configured for each data packet in both a new transmission process and a retransmission process is unique. After the data transmission period ends, that is, after all the four different data packets are completely transmitted, a data transmission period may be restarted to transmit new data packets, and in the restarted data transmission period, originally used indexes can be used to distinguish different data packets, and new indexes not used originally may also be used to distinguish different data packets.

In an embodiment, the first message further indicates data transmission stop information, wherein the stop information includes at least one of: the type of a stopped service, and a transmission-stopped time-domain interval.

In an embodiment, the first message is downlink control information or a control channel configuration message.

In an embodiment, the method further includes: a second message is sent to the terminal, wherein the second message indicates the total number of data packets to be transmitted within a designated data transmission period and/or indexes of the data packets within the designated data transmission period.

It should be noted that the first message may be downlink control information, and the second message may be a control channel configuration message.

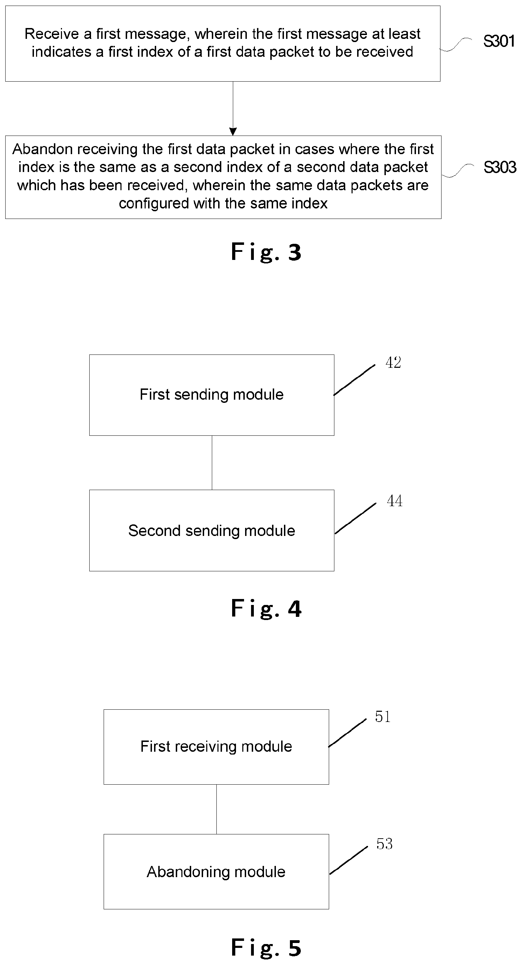

The present embodiment further provides a method for receiving data packets. Fig. 3 is a flowchart of a method for receiving data packets according to some embodiments of the present invention. As shown in Fig. 3, the method includes:
step S301, a first message is received, wherein the first message at least indicates a first index of a first data packet to be received; and
step S303, the first data packet is abandoned from being received in cases where the first index is the same as a second index of a second data packet which has been received, wherein the same data packets are configured with the same index.

By means of the steps, as a first message is received, wherein the first message at least indicates a first index of a first data packet to be received; and the first data packet is abandoned from being received in cases where the first index is the same as a second index of a second data packet which has been received, wherein the same data packets are configured with the same index, the problem of high power consumption of a terminal caused by repeated reception of data packets in the related art is solved, thereby reducing the power consumption of the terminal.

In an embodiment, the method further includes: the data packets are received according to a data transmission period, wherein a designated data packet in the data packets is configured to perform one new transmission and at least one retransmission within a designated data transmission period.

In an embodiment, the first message further indicates at least one of: the total number of data packets to be transmitted, a data transmission period, the number of retransmissions of a designated data packet, a new-transmission time-domain interval of the designated data packet, and a retransmission time-domain interval of the designated data packet.

In an embodiment, the first message further indicates data transmission stop information, wherein the stop information includes at least one of: the type of a stopped service, and a transmission-stopped time-domain interval.

In an embodiment, the first message is downlink control information and/or a control channel configuration message.

In an embodiment, the method further includes: a second message is received, wherein the second message indicates the total number of data packets to be transmitted within a designated data transmission period and/or indexes of the data packets within the designated data transmission period. It should be noted that the first message may be downlink control information, and the second message may be a control channel configuration message.

From the description of the described embodiments, a person skilled in the art would have been able to clearly understand that the methods in the described embodiments may be implemented by using software and necessary general hardware platforms, and of course may also be implemented using hardware, but in many cases, the former is a better embodiment. On the basis of such understanding, the portion of the technical solution of the present invention that contributes in essence or contributes to the prior art may be embodied in the form of a software product. The computer software product is stored in a storage medium (such as an ROM/RAM, a magnetic disk and an optical disc), and includes several instructions for enabling a terminal device (which may be a mobile phone, a computer, a server, or a network device, etc.) to perform the methods described in various embodiments of the present invention.

The present embodiment further provides an apparatus for sending data packets, the apparatus is configured to implement the described embodiments and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and could have been conceived.

Fig. 4 is a structural block diagram of an apparatus for sending data packets according to some embodiments of the present invention. As shown in Fig. 4, the apparatus includes:
a first sending module 42, configured to send a first message to a terminal, wherein the first message at least indicates a first index of a first data packet to be sent; and
a second sending module 44, configured to send the first data packet to the terminal, wherein the first data packet is used for instructing the terminal to abandon receiving the first data packet in cases where the first index is the same as a second index of a second data packet which has been received by the terminal, wherein the same data packets are configured with the same index.

By means of the described modules, as a first message is sent to a terminal, wherein the first message at least indicates a first index of a first data packet to be sent; and the first data packet is sent to the terminal, wherein the first data packet is used for instructing the terminal to abandon receiving the first data packet in cases where the first index is the same as a second index of a second data packet which has been received by the terminal, wherein the same data packets are configured with the same index, the problem of high power consumption of a terminal caused by repeated reception of data packets in the related art is solved, thereby reducing the power consumption of the terminal.

In an embodiment, the apparatus further includes: a transmission module, configured to send the data packets according to a data transmission period, wherein a designated data packet in the data packets is configured to perform one new transmission and at least one retransmission within a designated data transmission period.

In an embodiment, the apparatus further includes: a third sending module, configured to send a second message to the terminal, wherein the second message indicates the total number of data packets to be transmitted within a designated data transmission period.

The present embodiment further provides an apparatus for receiving data packets, the apparatus is configured to implement the described embodiments and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and could have been conceived. The receiving apparatus may be a terminal.

Fig. 5 is a structural block diagram of an apparatus for receiving data packets according to some embodiments of the present invention. As shown in Fig. 5, the apparatus includes:
a first receiving module 51, configured to receive a first message, wherein the first message at least indicates a first index of a first data packet to be received; and
an abandoning module 53, configured to abandon receiving the first data packet in cases where the first index is the same as a second index of a second data packet which has been received, wherein the same data packets are configured with the same index.

By means of the described modules, as a first message is received, wherein the first message at least indicates a first index of a first data packet to be received; and the first data packet is abandoned from being received in cases where the first index is the same as a second index of a second data packet which has been received, wherein the same data packets are configured with the same index, the problem of high power consumption of a terminal caused by repeated reception of data packets in the related art is solved, thereby reducing the power consumption of the terminal.

In an embodiment, the apparatus further includes: a second receiving module, configured to receive the data packets according to a data transmission period, wherein a designated data packet in the data packets is configured to perform one new transmission and at least one retransmission within a designated data transmission period.

In an embodiment, the apparatus further includes: a third receiving module, configured to receive a second message, wherein the second message indicates the total number of data packets to be transmitted within a designated data transmission period. It should be noted that the first message may be downlink control information, and the second message may be a control channel configuration message.

It should be noted that the described modules may be implemented by software or hardware. The latter may be implemented in the following manner, but is not limited thereto: all the described modules are located in the same processor; or all the modules are located in different processors in any arbitrary combination manner.

The present embodiment further provides a network system, including a base station and a terminal, wherein the base station is configured to send a first message to a terminal, wherein the first message at least indicates a first index of a first data packet to be sent; and
the terminal is configured to receive the first message, and to abandon receiving the first data packet in cases where the first index is the same as a second index of a second data packet which has been received by the terminal, wherein the same data packets are configured with the same index.

### Implementation manners

A broadcasting service may be provided for a Universal Mobile Telecommunications System (UMTS) over a cellular network. In a downlink channel, there may be two channels supporting a broadcast mechanism: one is Multicast-Broadcast Single Frequency Network (MBSFN), and the other is Single Cell Point-To-Multipoint (SC-PTM).

A part of control information related to SC-PTM transmission is broadcast in a System Information Block SIB20 (SIB20-NB), in which related configuration information of Single Cell Multicast Control channel (SC-MCCH) transmission is included (a window for transmission of an SC-MCCH is semi-statically defined); and control information of a Single Cell Multicast Transmission Channel (SC-MTCH) is carried on an SC-MCCH, i.e. content of an SC-MCCH message, in which configuration information SC-MTCH-Info required for SC-MTCH transmission is included, that is, a window for transmission of the SC-MTCH is semi-statically defined.

The SC-MCCH and the SC-MTCH are dynamically scheduled on a Physical Downlink Control Channel (PDCCH). If the SC-MCCH message is invalid/changes, the change may be indicated by using DCI on the Physical Downlink Control Channel (PDCCH), and UE can determine to start receiving a new SC-MCCH message according to related configurations such as a modification period of the SC-MCCH in the SIB20, etc. With regard to SC-PTM transmission, SC-PTM related control information (including scheduling information of the SC-MTCH) may be configured semi-statically by means of the SC-MCCH, and generally, only when a new MBMS service occurs, the SC-MCCH message changes.

The SC-PTM provides services for multiple users in a cell, and cannot provide user-specific adaptive parameter configurations, that is, cannot provide link adaptive transmission for a single user; therefore, the coverage or data transmission rate which the SC-PTM can provide depends on a user with the worst link quality. For users with good link quality, the receiving of data may be completed very quickly; however, in order to ensure the receiving performance of other users, the same data packet needs to be sent repeatedly for many times. For a user who has successfully received the data packet, he/she does not know whether a next data packet is a newly-transmitted data packet or a retransmitted data packet, and still needs to continue to receive the subsequent data packet. If the subsequently received data packet is a retransmitted data packet, the data packet will be meaningless to the user, wasting the power consumption of the user.

In an embodiment, an index of a data packet transmitted by the current SC-PTM may be indicated by DCI.

Exemplarily, the DCI may be used to indicate indexes of data packets within one predefined period (for example, 160 ms), or indicate indexes of data packets within a plurality of predefined periods. The DCI includes at least one of: DCI indicating change of an SC-MCCH message, and DCI for scheduling SC-MTCH.

In the one predefined period (for example, 160 ms), data transmitted by data packets with the same index is the same.

In the plurality of predefined periods, the indexes of data packets transmitted in adjacent predefined periods may be the same, and the transmitted data may be the same or different.

The index of a data packet is a numerical value in a predefined index set. Specifically, if every four data packets are used as one index period, indexes 00, 01, 10, 11 are indicated in units of 2 bits. If every eight data packets are used as one index period, indexes 000, 001, 010, 011, 100, 101, 110, 111 are indicated in units of 3 bits. If every 16 data packets are used as one index period, indexes 0000, 0001, 0010, 0011, 0100, 0101, 0110, 0111, 1000, 1001, 1010, 1011, 1100, 1101, 1110, 1111 are indicated in units of 4 bits. If every 32 data packets are used as one index period, 00000, 00001, 00010, 00011, 00100, 00101, 00110, 00111, 01000, 01001, 01010, 01011, 01100, 01101, 01110, 01111, 10000, 10001, 10010, 10011, 10100, 10101, 10110, 10111, 11000, 11001, 11010, 11011, 11100, 11101, 11110, 11111 are indicated in units of 5 bits.

In an embodiment, the indexes of data packets transmitted by SC-PTM transmission may be indicated by means of SC-MCCH. Configuration information of the SC-MCCH at least includes one of:
in an SC-MTCH scheduling window, a window range occupied by new transmission and a window range occupied by retransmission (e.g. subframe ranges in the SC-MTCH scheduling window) of data packets of different indexes are defined; in an SC-MTCH scheduling window, a window range occupied by new transmission and a window range occupied by retransmission of data packets of a plurality of index sets are defined; in an SC-MTCH scheduling window, a retransmission time-domain interval of a certain data packet or a plurality of data packets is configured, for example, data packets X1 to Xk are transmitted in a time period from n1 to n2, and after a time interval of Y, the data packets are retransmitted in a time period from Y+n1 to Y+n2; the number of retransmissions within the retransmission time period, and the total number of data packets can also be configured.

In the same SC-MTCH scheduling window, data transmitted by data packets with the same index may be the same or different, which depends on the total number of data packets transmitted in the SC-MTCH window and the value range of the indexes of the data packets.

In the same SC-MTCH scheduling window, data transmitted by data packets of the same index set may be the same or different, which depends on the total number of data packets transmitted in the SC-MTCH window and the value range of the indexes of the data packets.

The UE may determine whether data packets with the same index value are different data packets according to the total number of data packets, an index set period (for example, every four indexes belong to one index period) and window range information of the data packets with the same index value.

In an embodiment, some embodiments of the present invention further provide a method for indicating stopping of SC-PTM.

In an embodiment, when the SC-MCCH changes and there is SC-PTM transmission that needs to be stopped, at this time, at least one of the following information may be carried in a DCI message stopping the SC-MCCH: indication information for stopping the SC-PTM; the type of an SC-MCCH service (i.e. indicating which service is to be stopped); and stop indication in an SC-MCCH period. The indication information for stopping the SC-PTM is indication information for stopping an SC-PTM transmission service; the type of an SC-MCCH service is to indicate to stop SC-PTM transmission of which one or more service types; and the stop indication in an SC-MCCH period means that a stop time node indicated by SC-PTM stop transmission is within a valid time of the SC-MCCH message.

In an embodiment, some embodiments of the present invention further provide a method for joint indication by SC-MCCH and DCI, for example: an SC-MCCH configures the number of data packets transmitted in a certain time period, and DCI indicates indexes of data packets in the time period. Configuration information of the SC-MCCH includes: the number of data packets transmitted in one SC-MTCH scheduling window. Moreover, DCI is used to indicate indexes of data packets within the SC-MTCH scheduling window.

The indexes indicated by DCI are based on the number of transmitted data packets configured in one SC-MTCH scheduling window. If there are two transmitted data packets, then the DCI uses 1 bit to indicate indexes; if the number of the transmitted data packets is 2 to 4, then the DCI uses 2 bits to indicate indexes; if the number of the transmitted data packets is 4 to 8, then the DCI uses 3 bits to indicate indexes; if the number of the transmitted data packets is 8 to 16, then the DCI uses 4 bits to indicate indexes; and if the number of the transmitted data packets is 16 to 32, then the DCI uses 5 bits to indicate indexes.

### Embodiment 1

A method for indicating indexes of data packets within a predefined period (e.g.160 ms) by using DCI is provided.

In the predefined period, the DCI indicates indexes of data packets, and also needs to indicate the number of data packets to be transmitted within the predefined period (new transmission and re-transmission of the same data packet are counted as one data packet), or indicates that data packets of different indexes are different. In the predefined period, according to scheduling resource of data of each index and the receiving situation of UE for the data packet, for example, whether the data packet has been successfully received, the UE determines whether to receive the data packet on the resource.

The index of a data packet is a numerical value in a predefined index set. Specifically, if every four data packets are used as one index period, indexes 00, 01, 10, 11 are indicated in units of 2 bits. If every eight data packets are used as one index period, indexes 000, 001, 010, 011, 100, 101, 110, 111 are indicated in units of 3 bits. If every 16 data packets are used as one index period, indexes 0000, 0001, 0010, 0011, 0100, 0101, 0110, 0111, 1000, 1001, 1010, 1011, 1100, 1101, 1110, 1111 are indicated in units of 4 bits. If every 32 data packets are used as one index period, 00000, 00001, 00010, 00011, 00100, 00101, 00110, 00111, 01000, 01001, 01010, 01011, 01100, 01101, 01110, 01111, 10000, 10001, 10010, 10011, 10100, 10101, 10110, 10111, 11000, 11001, 11010, 11011, 11100, 11101, 11110, 11111 are indicated in units of 5 bits.

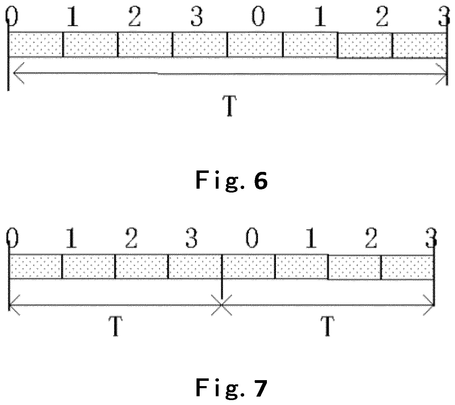

Fig. 6 is a schematic diagram of a flowchart of transmission of data packets according to one optional embodiment of the present invention. As shown in Fig. 6, taking four data packets being an index period as an example, in the figure, 0 represents an index 00 of a data packet; 1 represents an index 01 of a data packet; 2 represents an index 10 of a data packet; and 3 represents an index 11 of a data packet. If the UE has successfully received the data packet whose index is #00 at a certain moment within the predefined period, the UE will ignore scheduling for the index #00 within the range of subsequent events.

### Embodiment 2

Indicating indexes of data packets within a plurality of predefined periods (e.g. 160 ms) by using DCI is provided.

The DCI is used to indicate indexes of data packets within the plurality of predefined periods (e.g. 160 ms), for example, the indexes of data packets within one predefined period are defined as #00, 01, 10, 11. In adjacent periods, the indexes of data packets in Fig. 7 can be defined, and data transmitted may be the same or different, and may be indicated by signaling whether the data is the same. Fig. 7 is a schematic diagram of a flowchart of transmission of data packets according to another optional embodiment of the present invention. As shown in Fig. 7, if the same UE has successfully received data packets having indexes #00, 01, 10 in the previous period, then the UE only needs to receive a data packet with a data packet index #11 in the next period. If data transmitted by data packets with the same index in two adjacent periods is different, then the UE needs to receive data packets in the two adjacent periods.

### Embodiment 3

When DCI is used to notify change of an SC-MCCH, indexes of data packets are indicated.

SC-PTM related control information is broadcast via an SIB20 (SIB20-NB), and when the SIB20 (SIB20-NB) and the SC-MCCH related control information change, UE in a cell is notified by DCI. When the change occurs, an SC-PTM service may be being transmitted, and at this time, a new data packet may be being transmitted or a certain data packet may be being retransmitted. If a certain retransmitted data packet is being transmitted, for some UE that has successfully received the data packet, as the UE does not know whether the data packet is a retransmitted data packet or a next newly-transmitted data packet, the UE will also continue to receive this data packet, but this will cause some unnecessary power consumption overhead. In this case, in a DCI message notifying the change of the SC-MCCH related control information, the index information of a next data packet may be indicated, and the same index is allocated to data packets containing the same content. For example, 2-bit information may be used as indexes of data packets, that is, every four new data packets (indexes are 00, 01, 10, 11, respectively) serve as an index period. When the UE receives a data packet whose index is the same as the index of the previously received data packet, the UE will abandon receiving when a next retransmitted data packet arrives.

### Embodiment 4

A method for indicating indexes of data packets when an SC-MTCH is scheduled by using DCI.

Message content of the current DCI-scheduled SC-MTCH includes: scheduling resources, modulation coding policy, the number of repetitions, and the number of repetitions of DCI subframes. Information of the index of a next data packet may be added to this message content. If UE detects DCI containing scheduling information of the SC-MTCH on a common search space (CSS) of a PDCCH (NPDCCH) and can simultaneously learn whether a next data packet to be transmitted is retransmitted or newly transmitted, the UE determines, according to previous receiving situations thereof, whether to abandon receiving or continue to receiving. If the next data packet is a newly transmitted one, then a terminal needs to receive the data packet on a scheduling subframe of the SC-MTCH; and if the next data packet is a retransmitted one and if the UE has successfully received the data packet, then the UE will abandon receiving the data packet until scheduling of a next new data packet appears; otherwise, the UE will continue to receive the retransmitted data packet.

### Embodiment 5

A method for indicating stopping of SC-PTM when DCI is used to notifychange of an SC-MCCH.

An MAC CE for stopping an SC-PTM service is defined, wherein as shown in the following Table 1, an LCID of a sub-header of an MAC PDU is:

**Table 1**

| | |
|---|---|
| 10111 | SC-PTM Stop Indication |

and has a fixed size of 0 bit. When transmission of an SC-PTM service ends, a base station notifies UE in a cell by issuing the MAC CE. In the existing standards, it is also stipulated that when an SC-MCCH control message changes, the UE in the cell will be informed by DCI. Upon detection of the DCI again, the UE in the cell will receive a new SC-MCCH message, that is, starts to receive an SIB20 (SIB20-NB) message.

When indicating change of the SC-MCCH control message, there is a situation: at this time, the SC-PTM service ends, and a signaling message indicating stop of the SC-PTM needs to be issued, and it may be considered that the signaling message indicating stop of the SC-PTM is added to a DCI message notifying the change of the SC-MCCH control message.

### Embodiment 6

A method for defining a window range occupied by new transmission and a window range occupied by retransmission of data packets of different indexes in an SC-MTCH scheduling window.

In an SC-MTCH scheduling window, a window range occupied by new transmission and a window range occupied by retransmission of data packets of different indexes are defined; for example, in a value range of indexes of data packets of #00, 01, 10, 11, new transmission windows and retransmission windows of data packets with an index of 00 may be defined. The window may be a subframe range in an SC-MTCH scheduling window. There may be multiple new transmission and retransmission windows, which are specifically determined according to the total number of data packets to be transmitted in one SC-MTCH scheduling window (newly transmitted and retransmitted data packets with the same index are counted as one data packet) and the value range of indexes of data packets. If the total number of data packets to be transmitted in one SC-MTCH scheduling window is 8, and the value range of indexes of data packets is 4 (00, 01, 10, 11), then data packets with the same index in this SC-MTCH scheduling window correspond to two new transmission windows and two retransmission windows. As shown in Table 2 below:

**Table 2**

| Data packet index | New transmission window | | Retransmission window | |
|---|---|---|---|---|
| 00 | Window 1a | Window 1b | Window 1a' | Window 1b' |
| 01 | Window 2a | Window 2b | Window 2a' | Window 2b' |
| 10 | Window 3a | Window 3b | Window 3a' | Window 3b' |
| 11 | Window 4a | Window 4b | Window 4a' | Window 4b' |

### Embodiment 7

A method for defining a window range occupied by new transmission and a window range occupied by retransmission of data packets of a plurality of index sets in an SC-MTCH scheduling window.

In an SC-MTCH scheduling window, a window range occupied by new transmission and a window range occupied by retransmission of data packets of a plurality of index sets are defined; for example, in a value range of indexes of data packets of #00, 01, 10, 11, new transmission windows and retransmission windows of data packet sets with an index set of 00, 01, 10, 11 may be defined. The window may be a subframe range in an SC-MTCH scheduling window. There may be multiple new transmission and retransmission windows, which are specifically determined according to the total number of data packets to be transmitted in one SC-MTCH scheduling window (newly transmitted and retransmitted data packets with the same index are counted as one data packet) and the value range of indexes of data packets. If the total number of data packets to be transmitted in one SC-MTCH scheduling window is 8, and the value range of indexes of data packets is 4 (00, 01, 10, 11), then a data packet set with the same index set in this SC-MTCH scheduling window corresponds to two new transmission windows and two retransmission windows. As shown in Table 3 below:

**Table 3**

| Data packet index set | New transmission window | | Retransmission window | |
|---|---|---|---|---|
| 00, 01, 10, 11 | Window 1a | Window 1b | Window 1a' | Window 1b' |

### Embodiment 8

In one SC-MTCH scheduling window, a retransmission time-domain interval of a certain data packet or a plurality of data packets is defined.

Configuration information of the SC-MCCH includes: in an SC-MTCH scheduling window, a retransmission time-domain interval of a certain data packet or a plurality of data packets is configured, for example, data packets X1 to Xk are transmitted in a time period from n1 to n2, and after a time interval of Y, the data packets are retransmitted in a time period from Y+n1 to Y+n2; and the number of retransmissions within the retransmission time period can also be configured.

Embodiments of the present invention further provide a computer-readable storage medium, the computer-readable storage medium stores a computer program, wherein the computer program is configured to execute, when running, the steps in any one of the method embodiments.

In an embodiment, in the present embodiment, the computer-readable storage medium may be configured to store a computer program for executing the following steps:
S1, a first message is sent to a terminal, wherein the first message at least indicates a first index of a first data packet to be sent; and
S2 the first data packet is sent to the terminal, wherein the first data packet is used for instructing the terminal to abandon receiving the first data packet in cases where the first index is the same as a second index of a second data packet which has been received by the terminal, wherein the same data packets are configured with the same index.

By means of the steps, as a first message is sent to a terminal, wherein the first message at least indicates a first index of a first data packet to be sent; and the first data packet is sent to the terminal, wherein the first data packet is used for instructing the terminal to abandon receiving the first data packet in cases where the first index is the same as a second index of a second data packet which has been received by the terminal, wherein the same data packets are configured with the same index, the problem of high power consumption of a terminal caused by repeated reception of data packets in the related art is solved, thereby reducing the power consumption of the terminal.

In an embodiment, for specific examples in the present embodiment, reference can be made to the examples described in the described embodiments and optional embodiments, and thus they will not be repeated again in the present embodiment.

In an embodiment, in the present embodiment, the storage medium may include, but is not limited to, any medium that can store a computer program, such as a USB flash drive, a Read-Only Memory (ROM for short), a Random Access Memory (RAM for short), a removable hard disk, a magnetic disk, or an optical disc.

Embodiments of the present invention further provide an electronic apparatus, including a memory and a processor; wherein the memory stores a computer program, and the processor is configured to run the computer program to execute the steps in any one of the method embodiments.

In an embodiment, the electronic apparatus can further include a transmission device and an input/output device, wherein the transmission device is connected to the processor, and the input/output device is connected to the processor.

In an embodiment, in the present embodiment, the processor may be configured to execute the following steps by means of the computer program:
S1, a first message is sent to a terminal, wherein the first message at least indicates a first index of a first data packet to be sent; and
S2, the first data packet is sent to the terminal, wherein the first data packet is used for instructing the terminal to abandon receiving the first data packet in cases where the first index is the same as a second index of a second data packet which has been received by the terminal, wherein the same data packets are configured with the same index.

By means of the steps, as a first message is sent to a terminal, wherein the first message at least indicates a first index of a first data packet to be sent; and the first data packet is sent to the terminal, wherein the first data packet is used for instructing the terminal to abandon receiving the first data packet in cases where the first index is the same as a second index of a second data packet which has been received by the terminal, wherein the same data packets are configured with the same index, the problem of high power consumption of a terminal caused by repeated reception of data packets in the related art is solved, thereby reducing the power consumption of the terminal.

In an embodiment, for specific examples in the present embodiment, reference can be made to the examples described in the described embodiments and optional embodiments, and thus they will not be repeated again in the present embodiment.

Embodiments of the present invention further provide a computer-readable storage medium, the computer-readable storage medium stores a computer program, wherein the computer program is configured to execute, when running, the steps in any one of the method embodiments.

In an embodiment, in the present embodiment, the computer-readable storage medium may be configured to store a computer program for executing the following steps:
S1, a first message is received, wherein the first message at least indicates a first index of a first data packet to be received; and
S2, the first data packet is abandoned from being received in cases where the first index is the same as a second index of a second data packet which has been received, wherein the same data packets are configured with the same index.

By means of the steps, as a first message is received, wherein the first message at least indicates a first index of a first data packet to be received; and the first data packet is abandoned from being received in cases where the first index is the same as a second index of a second data packet which has been received, wherein the same data packets are configured with the same index, the problem of high power consumption of a terminal caused by repeated reception of data packets in the related art is solved, thereby reducing the power consumption of the terminal.

In an embodiment, for specific examples in the present embodiment, reference can be made to the examples described in the described embodiments and optional embodiments, and thus they will not be repeated again in the present embodiment.

In an embodiment, in the present embodiment, the storage medium may include, but is not limited to, any medium that can store a computer program, such as a USB flash drive, a Read-Only Memory (ROM for short), a Random Access Memory (RAM for short), a removable hard disk, a magnetic disk, or an optical disc.

Embodiments of the present invention further provide an electronic apparatus, including a memory and a processor; wherein the memory stores a computer program, and the processor is configured to run the computer program to execute the steps in any one of the method embodiments.

In an embodiment, the electronic apparatus can further include a transmission device and an input/output device, wherein the transmission device is connected to the processor, and the input/output device is connected to the processor.

In an embodiment, in the present embodiment, the processor may be configured to execute the following steps by means of the computer program:
S1, a first message is received, wherein the first message at least indicates a first index of a first data packet to be received; and
S2, the first data packet is abandoned from being received in cases where the first index is the same as a second index of a second data packet which has been received, wherein the same data packets are configured with the same index.

By means of the steps, as a first message is received, wherein the first message at least indicates a first index of a first data packet to be received; and the first data packet is abandoned from being received in cases where the first index is the same as a second index of a second data packet which has been received, wherein the same data packets are configured with the same index, the problem of high power consumption of a terminal caused by repeated reception of data packets in the related art is solved, thereby reducing the power consumption of the terminal.

In an embodiment, for specific examples in the present embodiment, reference can be made to the examples described in the described embodiments and optional embodiments, and thus they will not be repeated again in the present embodiment.

It is apparent that a person skilled in the art shall understand that all of the described modules or steps in the present invention may be implemented by using a general computing apparatus, may be centralized on a single computing apparatus or may be distributed on a network composed of multiple computing apparatuses, and may be implemented by using executable program codes of the computing apparatus. Thus, the described modules or steps may be stored in a storage apparatus and executed by the computing apparatus. In some cases, the shown or described steps may be executed in a sequence different from that shown herein, or they are manufactured into integrated circuit modules, or multiple modules or steps therein are manufactured into a single integrated circuit module. Thus, the present invention is not limited to any specific hardware and software combinations.

The content above only relates to preferred embodiments of the present invention, and is not intended to limit the present invention. For a person skilled in the art, the present invention may have various modifications and changes. Any modifications, equivalent replacements, improvements, etc. made within the principle of the present invention shall all fall within the scope of protection of the present invention.

## Claims

1. A method for sending a data packet, comprising:
sending a first message to a terminal, wherein the first message at least indicates a first index of a first data packet to be sent; and
sending the first data packet to the terminal, wherein the first data packet is used for instructing the terminal to abandon receiving the first data packet in cases where the first index is the same as a second index of a second data packet which has been received by the terminal, wherein the same data packets are configured with the same index.

2. The method according to claim 1, wherein the method further comprises:
sending the data packets according to a data transmission period, wherein a designated data packet in the data packets is configured to perform one new transmission and at least one retransmission within a designated data transmission period.

3. The method according to claim 1, wherein the first message further indicates at least one of:
the total number of data packets to be transmitted, a data transmission period, the number of retransmissions of a designated data packet, a new-transmission time-domain interval of the designated data packet, and a retransmission time-domain interval of the designated data packet.

4. The method according to claim 1, wherein the first message further indicates data transmission stop information, wherein the stop information comprises at least one of:
the type of a stopped service, and a transmission-stopped time-domain interval.

5. The method according to any one of claims 1-4, wherein the first message is downlink control information or a control channel configuration message.

6. The method according to claim 1, wherein the method further comprises:
sending a second message to the terminal, wherein the second message indicates the total number of data packets to be transmitted within a designated data transmission period and/or
indexes of the data packets within the designated data transmission period.

7. A method for receiving a data packet, comprising:
receiving a first message, wherein the first message at least indicates a first index of a first data packet to be received; and
abandoning receiving the first data packet in cases where the first index is the same as a second index of a second data packet which has been received, wherein the same data packets are configured with the same index.

8. The method according to claim 7, wherein the method further comprises:
receiving the data packets according to a data transmission period, wherein a designated data packet in the data packets is configured to perform one new-transmission and at least one retransmission within a designated data transmission period.

9. The method according to claim 7, wherein the first message further indicates at least one of:
the total number of data packets to be transmitted, a data transmission period, the number of retransmissions of a designated data packet, a new-transmission time-domain interval of the designated data packet, and a retransmission time-domain interval of the designated data packet.

10. The method according to claim 7, wherein the first message further indicates data transmission stop information, wherein the stop information comprises at least one of:
the type of a stopped service, and a transmission-stopped time-domain interval.

11. The method according to any one of claims 7-10, wherein the first message is downlink control information or a control channel configuration message.

12. The method according to claim 7, wherein the method further comprises:
receiving a second message, wherein the second message indicates the total number of data packets to be transmitted within a designated data transmission period and/or indexes of the data packets within the designated data transmission period.

13. An apparatus for sending a data packet, comprising:
a first sending module, configured to send a first message to a terminal, wherein the first message at least indicates a first index of a first data packet to be sent; and
a second sending module, configured to send the first data packet to the terminal, wherein the first data packet is used for instructing the terminal to abandon receiving the first data packet in cases where the first index is the same as a second index of a second data packet which has been received by the terminal, wherein the same data packets are configured with the same index.

14. An apparatus for receiving a data packet, comprising:
a first receiving module, configured to receive a first message, wherein the first message at least indicates a first index of a first data packet to be received; and
an abandoning module, configured to abandon receiving the first data packet in cases where the first index is the same as a second index of a second data packet which has been received, wherein the same data packets are configured with the same index.

15. A network system, comprising a base station and a terminal, wherein the base station is configured to send a first message to the terminal, wherein the first message at least indicates a first index of a first data packet to be sent; and
the terminal is configured to receive the first message, and to abandon receiving the first data packet in cases where the first index is the same as a second index of a second data packet which has been received by the terminal, wherein the same data packets are configured with the same index.

16. A computer-readable storage medium, the computer-readable storage medium storing a computer program, wherein the computer program is configured to execute, when running, the method as claimed in any one of claims 1-6 or the method as claimed in any one of claims 7-12.

17. An electronic apparatus, comprising a memory and a processor, wherein the memory stores a computer program, and the processor is configured to run the computer program to execute the method as claimed in any one of claims 1-6 or the method as claimed in any one of claims 7-12.
